# EUROPÄISCHE PATENTSCHRIFT

(11) **EP 1 283 752 B1**
(45) Veröffentlichungstag und Bekanntmachung des Hinweises auf die Patenterteilung: **05.11.2003**
(21) Anmeldenummer: 01955284.3
(22) Anmeldetag: 16.05.2001
(51) Int. Cl.: B09B 3/00, B65B 69/00

(54) **VORRICHTUNG ZUM ENTLEEREN VON DRUCKGASPACKUNGEN**
DEVICE FOR EMPTYING A COMPRESSED GAS PACKAGING
DISPOSITIF PERMETTANT DE VIDER DES EMBALLAGES A AIR COMPRIME

(30) Priorität: 16.05.2000 DE 20008610 U
(43) Veröffentlichungstag der Anmeldung: 19.02.2003
(73) Patentinhaber: Fraunhofer-Gesellschaft zur Förderung der angewandten Forschung e.V., 80636 München (DE)
(72) Erfinder: MOCK, Stefan, 41061 Mönchengladbach (DE); DÜRHAGER, Thomas, 41236 Mönchengladbach (DE); EMBERS, Ralph, 47906 Kempen (DE)
(86) Internationale Anmeldenummer: EP0105599
(87) Internationale Veröffentlichungsnummer: WO01087507

(56) Entgegenhaltungen:
- EP-A- 0 221 442
- DE-C- 4 243 966
- DE-U- 29 912 166
- US-A- 4 459 906
- US-A- 5 181 462
- US-A- 5 441 088

## Beschreibung

Die vorliegende Erfindung betrifft eine Vorrichtung zum Entleeren von Druckgaspackungen, mit einer Öffnungseinrichtung zum Einbringen einer Abflußöffnung in den Boden der Druckgaspackung.

Eine solche Vorrichtung ist aus dem deutschen Gebrauchsmuster DE 299 12 166 U1 bekannt. Beim Einsatz der hier beschriebenen Vorrichtung wird eine Spraydose im Boden angestochen, woraufhin sich das noch in der Spraydose befindliche Restgas nach außen entspannen kann. Danach wird durch eine im Kopf der Spraydose eingebrachte Öffnung Stickstoffgas in die Spraydose eingepreßt, um das immer noch verbliebene Restgas möglichst vollständig aus der Spraydose zu entfemen. Dann wird die entleerte Spraydose einer weiteren Verwertung zugeführt. Diese Vorrichtung hat den großen Nachteil, daß zum Entleeren von Spraydosen große Mengen wertvollen Stickstoffgases verwendet werden müssen. Der Einsatz von großen Mengen Frischgas sowie die dadurch verursachte große entsorgungspflichtige Mischgasmenge führt zu unnötig hohen Kosten beim Recycling von Spraydosen. Außerdem ist die hier angegebene Abdichtung der von der Anstechnadel verursachten Öffnung im Boden der Spraydose nur unzureichend gegen die Umgebung abgedichtet. Daraus ergibt sich, daß die weitere Umgebung der Entleerungsvorrichtung zusätzlich abgedichtet werden muß.

Die hier beschriebene Vorrichtung ist außerdem ziemlich kompliziert, da die gesamte Entleerungsanlage durch die vielen zu koordinierenden Einzelbewegungen, beispielsweise der Einstechnadeln, einen immensen Steuerungsaufwand bedeuten. Die hier beschriebene Abdichtung im Kopf der Spraydose zur Vorbereitung der Einbringung eines Inertgases setzt außerdem ein unbeschädigtes Normventil ohne weitere Bauteile voraus. Dies macht zusätzlich eine Vorselektion aller zu bearbeitenden Spraydosen erforderlich, um in der Bauart abweichende Spraydosen auszusondern und einer separaten Behandlung zuzuführen.

Das US-Patent 5 441 088 beschreibt eine Vorrichtung zum Entleeren von Petroleumgasbehältern, mit einer Öffnungseinrichtung zum Einbringen einer Abflußöffnung in den Boden der Behälter, mit einer in der Öffnungseinrichtung angeordneten mit einer Abflußleitung kommunizierenden Hohlnadel zur Schaffung der Abflußöffnung und mit einer Preßeinrichtung zur Kompression der Petroleumgasbehälter und zur Betätigung der Hohlnadel der Öffnungseinrichtung, sowie Dichtungen zur Abdichtung einer Verdichtungskammer gegenüber den zu komprimierenden Behältern.

Aus dem US-Patent 5 181 462 ist eine automatische Verdichtungs- und Zerkleinerungseinrichtung für die Verarbeitung von leeren Aerosolspraydosen bekannt, die den Druck in den Dosen herabsetzt, die Dosen evakuiert und für eine folgende Deponie oder Wiederverwendung komprimiert.

Es ist eine Aufgabe der Erfindung, eine Vorrichtung zum Entleeren von Druckgaspackungen vorzuschlagen, in der die aus dem Stand der Technik bekannten Nachteile vermieden oder zumindest stark eingeschränkt werden.

Die Aufgabe wird gelöst durch eine Vorrichtung gemäß Anspruch 1.

Mit der erfindungsgemäßen Vorrichtung ist es möglich, die Entfernung der Restinhaltsstoffe einer Druckgaspackung über eine Volumenreduzierung der Spraydose ohne Stickstoffspülung zu realisieren. Dadurch reduziert sich der Stickstoffverbrauch bei der Entleerung von Spraydosen stark. Die erfindungsgemäße Vorrichtung erlaubt die gleichzeitige Entleerung von Druckgaspackungen und deren Komprimierung zu platzsparender Weiterverarbeitung und Recycling. Die hierbei auf einer federnden Lagerung basierende Nadel-Ein- und Ausbringung durch die Öffnungseinrichtung reduziert den Steuerungsaufwand der erfindungsgemäßen Vorrichtung erheblich, da sämtliche Linearbewegungen durch ein Antriebsbauteil realisiert werden können. Vorteilhafterweise spielt bei der erfindungsgemäßen Vorrichtung die individuelle Ausführung des Dosenventils einer Druckgaspackung keine Rolle, da diese keinen Einfluß auf den Entleerungsbetrieb hat. Evtl. in der zu entleerenden Druckgaspackung vorhandene Mischkugeln können die erfindungsgemäße Anordnung einer Hohlnadel zur Schaffung der Abflußöffnung nicht behindern.

In einer vorteilhaften Weiterbildung der Erfindung ist die Preßeinrichtung bzw. deren Preßtisch mit einem, am Umfang des Bodens der zu entleerenden Druckgaspackungen zur Anlage kommendem, Außendichtring versehen.

Weitere vorteilhafte Ausbildungen der Erfindung sind den Unteransprüchen zu entnehmen.

Zum besseren Verständnis der Erfindung wird diese anhand eines Ausführungsbeispiels unter Zuhilfenahme der folgenden Zeichnungen näher beschrieben.

Figur 1 zeigt in schematischer Darstellung ein Ausführungsbeispiel der erfindungsgemäßen Vorrichtung, eingesetzt in eine Entleermaschine.

Figur 2 zeigt beispielhaft eine schematische Darstellung einer erfindungsgemäßen Vorrichtung, teilweise im Schnitt dargestellt.

Figur 2a zeigt schematisch stark vereinfacht die Position einiger in Figur 2 näher beschriebener Komponenten.

Figur 2b zeigt schematisch stark vereinfacht eine teilweise im Schnitt dargestellte Ausführungsform der erfindungsgemäßen Hohlnadel.

Figur 2c zeigt schematisch stark vereinfacht eine teilweise im Schnitt dargestellte formschlüssige Verbindung von Dichthülse und Innendichtring.

Figur 3 zeigt schematisch eine der erfindungsgemäßen Vorrichtung zuordenbare Zentriereinheit.

Figur 3a zeigt schematisch stark vereinfacht die Position einiger in Figur 3 näher beschriebenen Komponenten.

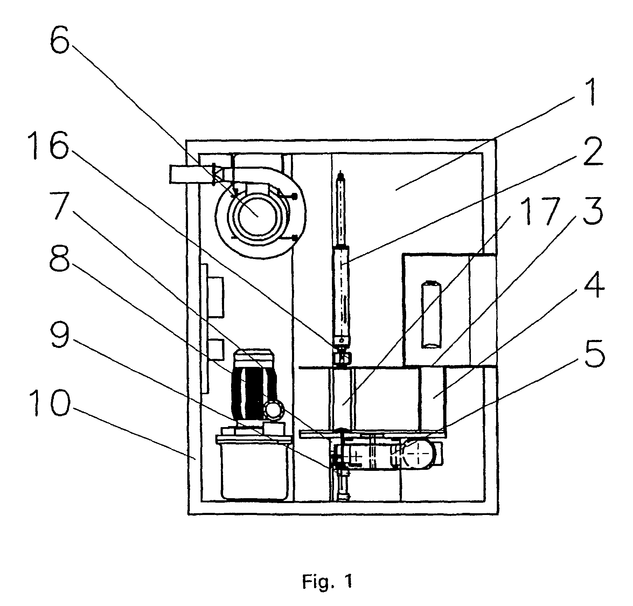

Figur 1 zeigt eine in einem geschlossenen Raum 10 untergebrachte Vorrichtung zur Entleerung von Druckgaspackungen. In einem mit dem Bezugszeichen 1 bezeichneten Entleerraum befindet sich ein Preßzylinder 2 mit einem Preßstempel 16, der mit einer Vorrichtung 9 zur Entleerung von Druckgaspackungen zusammenarbeitet, um eine Druckgaspackung, hier beispielhaft dargestellt als eine Spraydose 17, zu komprimieren und dabei zu entleeren. Hierzu wird eine Spraydose 17 durch eine Schleuse 3 über eine Zentriereinheit 4 in das Innere des Entleerraums 1 gebracht und über einen Rundschalttisch 5 in die in Figur 1 dargestellte Position der Spraydose 17 transportiert. Ein Motor 7 treibt den Rundschalttisch 5 an, um über die Zentriereinheit 4 eingebrachte Spraydosen 17 zur Entleerungsvorrichtung 9 zu bringen. An der mit 8 bezeichneten Stelle werden die komprimierten Spraydosen ausgeworfen. Die Entleermaschine ist mit einer internen Lüftung 6 ausgestattet, die einen (nicht gezeigten) Aktivkohlefilter tragen kann oder an eine Aktivkohlefilteranlage angeschlossen sein kann.

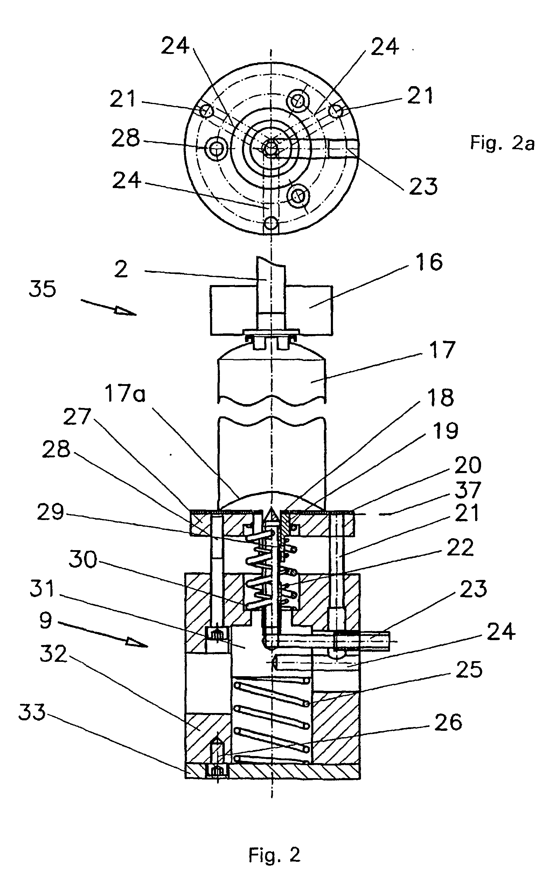

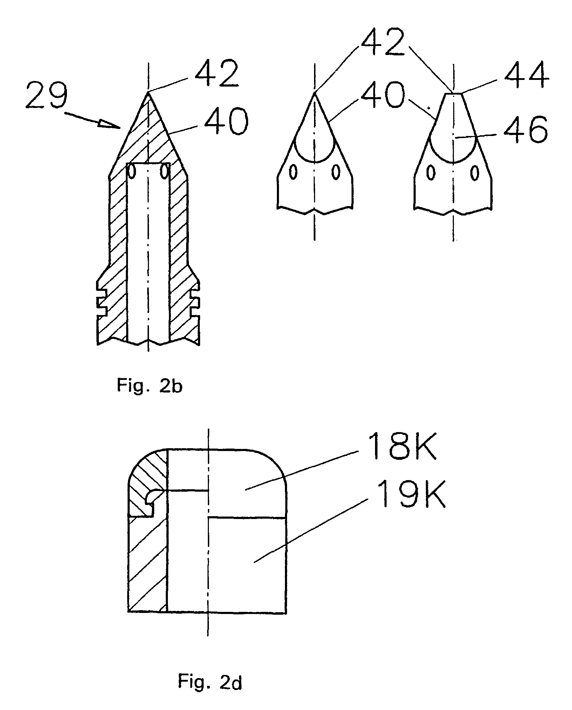

Figur 2 zeigt die Entleerungsvorrichtung 9 in detaillierter Darstellung. Man erkennt von oben nach unten gehend den Preßstempel 16, der, von einem nur gebrochen dargestellten Kolben eines Preßzylinders 2 geführt, auf eine teilweise dargestellte Spraydose 17 bzw. deren Kopf aufgesetzt ist. Die Spraydose 17 selbst steht auf einem Preßtisch 27, der mit einem Außendichtring 20 belegt ist und den Umfang des Bodens 17a der Spraydose 17 berührt.

Zentriert in der Mitte des Preßtisches 27 ist eine als Hohlnadel 29 ausgeführte Ausflußnadel (für das aus der Spraydose 17 zu entfernende Material) mit einer Führungseinrichtung für eine Innendichthülse 19 angeordnet, die mit einem Innendichtring 18 bedeckt ist. Die Hohlnadel 29 wird von einem im Schnitt dargestellten Nadelkolben 31 getragen. Man erkennt die Hohlnadel 29, die mit einer Abflußleitung 23, die etwa im rechten Winkel hierzu verläuft, kommuniziert. Der Nadelkolben 31 ist im als Ringzylinder ausgebildeten Entleersockel 32 geführt und gegen eine Schraubendruckfeder 25, die sich an einer Bodenplatte 33 abstützt, axial bewegbar. Die Bodenplatte 33 ist mittels Befestigungsmitteln 26 am Entleersockel 32 befestigt. Der Nadelkolben 31 trägt drei Ausrückhebel 24, die (siehe Figur 2a) im Abstand von 120° im Umkreis um die Zentralachse verteilt angeordnet sind. Die Ausrückhebel 24 sind mit rechtwinklig hierzu verlaufenden Ausrückstößeln 21 fest verbunden. Die Ausrückstößel 21 dringen, wie in den Figuren 2 und 2a dargestellt ist, durch den Preßtisch 27 und liegen mit dessen daraufliegendem Außendichtring 20 plan in der Ebene, auf der die Spraydose 17 steht. Der Preßtisch 27 ist über drei Befestigungsmittel, beispielsweise Innensechskantschrauben 28, die von unten in den Preßtisch 27 eingeschraubt sind, befestigt Damit kann sich der Preßtisch nicht weiter als in der dargestellten Distanz von dem Entleersockel 32 entfernen. Der Preßtisch 27 wird von einer Schraubendruckfeder 30, die sich an einem Kragen des Entleersockels 32 abstützt, in die dargestellte Position gebracht. Eine von der Schraubendruckfeder 30 umgebene Schraubendruckfeder 22, die von der Hohlnadel 29 zentriert wird und sich mit dem unteren Ende am Nadelkolben und mit dem oberen Ende an der Unterseite des Preßtisches 27 abstützt, drückt die Innendichthülse 19 in die dargestellte Position (in Figur 2 nach oben).

Figur 2b zeigt eine schematisch dargestellte Ausführungsform einer erfindungsgemäßen Hohlnadel 29, die eine Spitze 42 aufweist, die Schneid- oder Aufreißkanten 40 trägt und, wie hier dargestellt, in Art eines Spitzmeißels ausgebildet ist. Man erkennt in der rechten Ansicht von Figur 2b gut die Breite einer Spitze 44, in der sich schräge Flächen 46 schneiden und die Schnittkante der Spitze 44 der Hohlnadel 29 bilden.

In Figur 2c ist eine teilweise im Schnitt dargestellte formschlüssige Verbindung eines Innendichtrings 18K mit einer Dichthülse 19K als alternative Ausbildung zur in Figur 2 dargestellten Form des Innendichtrings 18 gezeigt, der in Form einer Beilagscheibe auf einer Dichthülse 19 angebracht ist. Abhängig von der Beanspruchung der Anlage im Betrieb wird die eine oder andere Innendichtringvariante bzw. deren Verbindung an der Dichthülse gewählt werden.

Der Entleervorgang unter Verwendung der erfindungsgemäßen Vorrichtung läuft folgendermaßen ab: Spraydosen 17 werden in die in Figur 1 dargestellte Position gebracht. Der Preßzylinder 2 fährt nach unten auf die Spraydose 17, bis der Preßstempel 16 auf dem oberen Rand der Spraydose 17 fest aufliegt. Aufgrund der federnden Lagerung des Preßtisches 27 über die Schraubendruckfeder 30 bewegt sich jetzt bei weiterer Bewegung des Preßzylinders 2 die Spraydose 17 zusammen mit dem Preßstempel 16 und dem Preßtisch 27 nach unten. Hierbei wird die Spraydose 17 durch den Preßzylinder 2 und die Schrauben 28 linear geführt. Der Abstand zwischen dem Preßtisch 27 und dem feststehenden Entleersockel 32 verringert sich hierbei. Die Innendichthülse 19, die Hohlnadel 29 und die Ausrückstößel 21 werden zunächst nicht mitbewegt. Durch eine weitere Bewegung des Preßtisches 27 nach unten wird die Innendichthülse 19 fest an dem Boden 17a der Spraydose 17 von außen angepreßt. Der Anpreßdruck ergibt sich aus der Reihenschaltung der Federn 25 und 22. Hierbei kann die Wegänderung durch die Feder 25 aufgrund einer sehr großen Federkonstante vernachlässigt werden. Alternativ können anstatt der hier beispielhaft verwendeten Schraubenfedern 22 und 25 auch andere entsprechende Maschinenelemente mit gleicher Wirkung eingesetzt werden.

Während des weiteren Verfahrens des Preßzylinders 2 nach unten wird nun der Boden 17a der Spraydose 17 auf die Hohlnadel 29 gedrückt und angestochen, d.h. geöffnet, während die Innendichthülse 19 weiterhin gegen den Boden 17a anliegt. Nun werden die Inhaltsstoffe der Spraydose 17 durch deren Kompression und der damit verbundenen Verringerung des Innenvolumens der Spraydose 17 über die Hohlnadel 29 über die Abflußleitung 23 in einen hier nicht weiter dargestellten Behälter abgeführt und entsorgt. Während die Spraydose 17 hierbei weiter komprimiert wird, erreicht der Preßstempel 16 an einer Position oder Wegmarke 37 die Ausrückstößel 21, die über die Ausrückhebel 24 den Nadelkolben 31 und damit die Hohlnadel 29 bei fortgesetzter Bewegung gegen die Feder 25 wieder aus dem Boden 17a der Spraydose 17 herausdrückt. Bei Erreichen der Endlage wird über ein nicht dargestelltes Ventil der Rückfluß der soeben entleerten Stoffe verhindert. In einem weiteren Schritt wird der Preßstempel 16 in seine Ausgangslage zurückgefahren. Die Federn entspannen sich bis zur eingestellten Vorspannung und bringen damit den Preßtisch 27 wieder in seinen in Figur 2 dargestellten Ausgangszustand.

Danach kann der Rundschalttisch 5 einen Teilschritt weiterdrehen und bei Erreichen einer hier nicht näher dargestellten Auswurfposition die komprimierte Spraydose 17 über eine nicht gezeigte freie Auswurföffnung führen, durch die sie mit Hilfe der Schwerkraft aus der Aufnahme in eine nicht dargestellte Abführvorrichtung fallen kann.

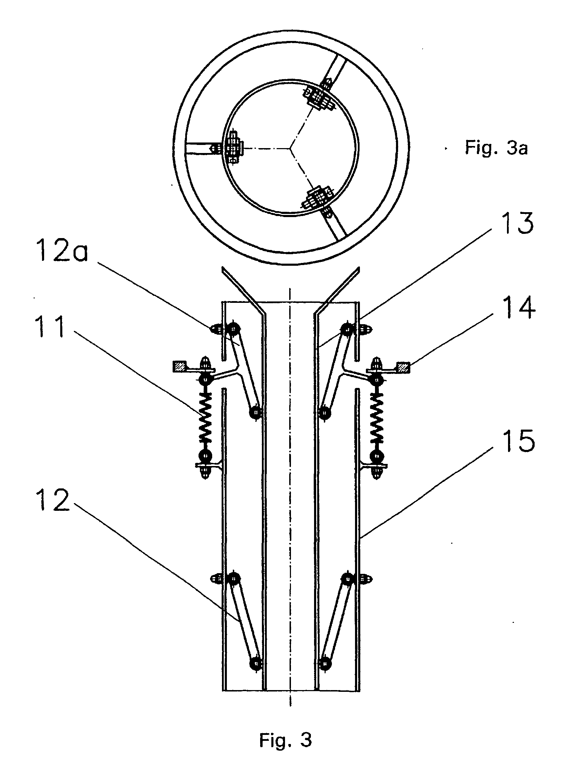

Figur 3 zeigt schematisch einige Einzelheiten der Zentriereinheit 4, mittels der die Druckgaspackungen zentriert auf den Rundschalttisch 5 (Figur 1) positioniert werden. Man erkennt in Figur 3 Gleitschienen 13, die über Umlenkhebel 12, 12a über einen Synchronisierring 14 geführt werden. Die Umlenkhebel 12 und 12a sind wie dargestellt im Einwurfrohr 15 gelenkig befestigt und über Zugfedern 11, über die die Andruckkraft der Gleitschienen 13 eingestellt wird, gesteuert. Die Positionen 11, 12, 12a und 13 sind wie in Figur 3a schematisch dargestellt ist, um eine Zentralachse im Abstand von 120° in dreifacher Stückzahl angeordnet.

Alternativ zur Zentriereinheit 4 kann die Zuführeinrichtung mit wenigstens einem (nicht gezeigten) Greiferroboter ausgestattet sein, der die zu entleerenden Dosen in die Entleerungsposition (siehe Fig. 1) bringt.

Die Entleereinheit entleert nicht restentleerte Druckgaspackungen und reduziert während dieses Prozesses gleichzeitig das Feststoffvolumen durch Zusammenpressen.

Eine mehr automatisierte Anlage arbeitet wie folgt:

Die Druckgaspackungen können hierbei im Durchmesser und in der Höhe variieren. Zur Entleerung werden sie nacheinander von oben über eine Zuführöffnung in das Einwurfrohr der Entleermaschine eingeworfen, automatisch zentriert und anschließend mit einem Rundschalttisch in einem ersten Schaltschritt bis zu einer Entleereinheit weiter transportiert. Hier werden sie hydraulisch oder pneumatisch von oben zusammengepreßt und gleichzeitig von unten über einen Federmechanismus mit einer Hohlnadel angestochen. Das Gemisch aus Flüssigkeit und Treibgas gelangt anschließend durch die Hohlnadel und die Abflußleitung aus dem Inneren der Druckgaspackungen in weiterführende Prozesse.

In einem weiteren Schaltschritt gelangen die Druckgaspackungen zu einer Auswurfvorrichtung, wo sie direkt in einen, unterhalb der Maschine bereitstehenden Behälter oder auf ein Förderband ausgeworfen werden. Der Behälter muß zum Transport wassergefährdender Stoffe geeignet sein. Ein hier eingesetztes Förderband muß eine unterhalb des Bandes angeordnete Sammelrinne besitzen, die die Restflüssigkeiten definiert auffangen kann.

Mit der Entleereinrichtung können Druckgaspackungen mit einem Durchmesser von 33 bis 90 mm und einer Höhe von 60 bis 350 mm zentriert aufgenommen und entleert werden.

Die Entleermaschine besitzt eine Zuführöffnung, durch die die Druckgaspackungen eingeworfen werden können. Zu Wartungs- und Reinigungszwecken besitzt die Entleermaschine eine einfache Handsteuerung, mit der jeweils ein Rundschalttakt weitergefahren werden kann.

Zu Beginn der Arbeit an der Maschine müssen zunächst die nachgeschalteten Wege für die Feststoffe, die Flüssigkeiten und die Treibgase freigegeben werden und das Inertgas zur Inertisierung des Entleerraums zur Verfügung stehen. Jetzt kann die Maschine im Automatikbetrieb eingeschaltet werden. Sind alle sicherheitstechnischen Einrichtungen aktiv, wird grünes Licht gegeben und die erste Druckgaspackung kann zur Entleerung eingeworfen werden. Die Druckgaspackungen müssen mit dem Boden nach unten in das Einwurfrohr eingeworfen werden. Vor dem Einwurf der Druckgaspackung müssen die Schutzkappen entfernt werden. Der Entleertakt wird durch die automatische Erkennung der ersten Druckgaspackung im Zuführrohr aktiviert. Während des Entleervorgangs wird rotes Licht angezeigt. Die nächste Druckgaspackung kann jedoch bereits eingeworfen werden, sobald die Einwurföffnung wieder frei ist und grünes Licht gegeben wird.

Das gesamte Maschinengestell der Entleermaschine wird beispielsweise aus Edelstahl gefertigt. Die angefertigten Inneneinbauten werden beispielsweise in Aluminium und Edelstahl ausgeführt.

Die gesamte Steuerung kann über eine frei programmierbare Steuerung (SPS) realisiert werden.

Der Antrieb der Entleerungsmaschine kann hydraulisch, pneumatisch und elektrisch sein.

Da innerhalb der Maschine Flüssigkeiten der Wassergefährdungsklasse 9 austreten können, werden vorzugsweise unterhalb der Entleermaschine entsprechende Leitbleche vorgesehen, die diese Restflüssigkeiten dirigieren, nach unten in hierfür bereitstehende Behälter oder auf ein Förderband ableiten, um ein Eindringen der Flüssigkeiten in den Erdboden zu vermeiden.

Für den Betrieb der Entleerungsmaschine ist es erforderlich, daß der Untergrund unterhalb der Entleerungsmaschine als zweite Barriere eine Auffangwanne mit Bauartzulassung gemäß WHG erhält.

Die Entleerungsmaschine wird üblicherweise mit CE-Konformitätserklärung geliefert, wodurch sichergestellt ist, daß alle in der EU geltenden Verordnungen und Bestimmungen, die für diese Maschine gelten, eingehalten werden. Sie wird entsprechend den Unfallverhütungsvorschriften (UVV) ausgeführt.

Der Einwurfbereich wird durch ein Schleusensystem vom Entleerraum getrennt, wodurch der Eingriff in den Entleerraum verhindert wird. Weiterhin wird hierdurch zusammen mit der Lüftung verhindert, daß Lösungsmitteldämpfe und Treibgase in den Außenbereich vordringen können. Die im Innenbereich vorherrschende Explosionsschutz-Zone 1 wird dadurch auf den eigentlichen Entleerraum beschränkt. Um zu verhindern, daß im Entleerraum eine explosionsfähige Atmosphäre entstehen kann, wird dieser Raum bei jedem Auspreßvorgang mit Stickstoff inertisiert. Zusätzlich werden die Treibgase und die Lösungsmittel, die im Störfall entweichen können, über eine explosionsgeschützte Lüftungsanlage durch einen Aktivkohlefilter abgesaugt. Alle elektrischen Betriebsmittel innerhalb des Entleerraums sind mindestens für die Explosionsschutz-Zone 1 zugelassen und besitzen eine entsprechende Konformitätsbescheinigung.

Als weitere Einsatzmöglichkeiten für die erfindungsgemäße Vorrichtung bieten sich die Verwertungen von Getränkedosen, Konservendosen, Aerosoldosen, Kosmetikprodukten und pharmazeutischen Produkten an. Hierbei können alle flüssigen und/oder gasförmigen Medien in Behälter, die plastisch verformbar sind und eine definierbare Dichtfläche aufweisen, verarbeitet werden. Mit der erfindungsgemäßen Vorrichtung können die genannten Stoffe aus den genannten Behältern zur weiteren Verwendung schnell und sortenrein entfernt werden. Die Feststoffe der Behältnisse selbst erfahren eine Volumenreduktion, wodurch sich außerdem die Lagerung und der Transport vereinfachen.

## Patentansprüche

1. Vorrichtung zum Entleeren von Druckgaspackungen, mit einer Öffnungseinrichtung zum Einbringen einer Abflußöffnung in den Boden der Druckgaspackungen,
- mit einer in der Öffnungseinrichtung angeordneten, mit einer Abflußleitung (23) kommunizierenden Hohlnadel (29) zur Schaffung der Abflußöffnung,
- mit einer Preßeinrichtung (35) zur Kompression der Druckgaspackungen (17) und gleichzeitigen Betätigung der Hohlnadel (29) der Öffnungseinrichtung sowie einer Dichthülse (19),
**dadurch gekennzeichnet, daß**
- die die Hohlnadel (29) umgebende Dichthülse (19) zur Anlage am Boden der Druckgaspackungen (17) federgestützt ausgebildet ist, und
- die Preßeinrichtung (35) eine Wegmarke (37) aufweist, ab der bei laufender Kompression einer Druckgaspackung (17) die Hohlnadel (29) aus der Abflußöffnung herausgedrückt wird.

2. Vorrichtung nach Anspruch 1, **dadurch gekennzeichnet, daß** die Dichthülse (19) durch Schraubenfedern gestützt ist.

3. Vorrichtung nach Anspruch 1 oder 2, **dadurch gekennzeichnet, daß** die Preßeinrichtung (35) einen Preßstempel (16) und einen Preßtisch (27) aufweist, wobei auf dem Preßtisch (27) ein am Umfang des Bodens der Druckgaspackungen (17) zur Anlage kommender Außendichtring (20) angeordnet ist.

4. Vorrichtung nach Anspruch 1, 2 oder 3, **dadurch gekennzeichnet, daß** die Preßeinrichtung (35) einen hydraulischen oder pneumatischen Antrieb aufweist.

5. Vorrichtung nach einem der vorhergehenden Ansprüche, **dadurch gekennzeichnet, daß** die Dichthülse (19K) mit einem Innendichtring (18K) formschlüssig verbunden ist.

6. Vorrichtung nach einem der vorhergehenden Ansprüche, **dadurch gekennzeichnet, daß** die Hohlnadel (29) eine Spitze (42) aufweist, die Schneid- oder Aufreißkanten (40) trägt und insbesondere in Art eines Flachspitzmeißels ausgebildet ist.

7. Vorrichtung nach einem der vorhergehenden Ansprüche, **gekennzeichnet durch** eine Zuführeinrichtung mit einem Einwurfrohr (4) mit integrierter Zentrierung für Dosen (17) mit unterschiedlichen Durchmessern und unterschiedlichen Höhen.

8. Vorrichtung nach einem der vorhergehenden Ansprüche, **gekennzeichnet durch** eine Zuführeinrichtung mit wenigstens einem Greiferroboter.

9. Vorrichtung nach einem der vorhergehenden Ansprüche, **dadurch gekennzeichnet, daß** sie in einem gegen die Umgebung abgeschlossenen Arbeitsraum (1) angeordnet ist, der eine Schleuse (3) zur Umgebung aufweist.

## Claims

1. Apparatus for emptying compressed-gas containers, having an opening device for introducing an outflow opening into the base of the compressed-gas containers,
- having a hollow needle (29) which is arranged in the opening device, communicates with an outflow line (23) and is intended for creating the outflow opening,
- having a pressing device (35) for compressing the compressed-gas containers (17) and, at the same time, actuating the hollow needle (29) of the opening device, and also a sealing sleeve (19),
**characterized in that**
- the sealing sleeve (19), which encloses the hollow needle (29), is designed in a spring-supported manner for abutment against the base of the compressed-gas containers (17), and
- the pressing device (35) has a marker (37), from which point, as compression of the compressed-gas container (17) is taking place, the hollow needle (29) is forced out of the outflow opening.

2. Apparatus according to Claim 1, **characterized in that** the sealing sleeve (19) is supported by helical springs.

3. Apparatus according to Claim 1 or 2, **characterized in that** the pressing device (35) has a pressing ram (16) and a pressing table (27), an outer sealing ring (20) which comes into abutment against the circumference of the base of the compressed-gas containers (17) being arranged on the pressing table (27).

4. Apparatus according to Claim 1, 2 or 3, **characterized in that** the pressing device (35) has a hydraulic or pneumatic drive.

5. Apparatus according to one of the preceding claims, **characterized in that** the sealing sleeve (19K) is connected in a form-fitting manner to an inner sealing ring (18K).

6. Apparatus according to one of the preceding claims, **characterized in that** the hollow needle (29) has a tip (42) which bears cutting or tear-open edges (40) and is designed, in particular, in the manner of a flat-pointed chisel.

7. Apparatus according to one of the preceding claims, **characterized by** a feed device with an introduction tube (4) with integrated centring means for cans (17) of different diameters and different heights.

8. Apparatus according to one of the preceding claims, **characterized by** a feed device with at least one gripper robot.

9. Apparatus according to one of the preceding claims, **characterized in that** it is arranged in an operating space (1) which is closed off from the surroundings and has an air lock (3) in relation to the surroundings.

## Revendications

1. Dispositif pour vider des emballages à gaz sous pression comportant une installation d'ouverture pour introduire un orifice d'évacuation dans le fond de l'emballage,
- une aiguille creuse (29) prévue dans l'installation d'ouverture et communicant avec une conduite d'évacuation (23) pour réaliser un orifice d'évacuation,
- une installation de compression (35) pour comprimer le conditionnement à gaz sous pression (17) et actionner en même temps l'aiguille creuse (29) de l'installation d'ouverture, ainsi qu'un manchon d'étanchéité (19).
**caractérisé en ce que**
le manchon d'étanchéité (19) entourant l'aiguille creuse (29) est soutenu par un ressort pour s'appuyer contre le fond du conditionnement à gaz sous pression (17) et
l'installation de compression (35) comporte un repère de course (37) à partir duquel, en cours de compression d'un conditionnement à gaz sous pression (17), l'aiguille (29) est éjectée de l'orifice d'évacuation.

2. Dispositif selon la revendication 1,
**caractérisé en ce que**
le manchon d'étanchéité (19) est soutenu par des ressorts hélicoïdaux.

3. Dispositif selon la revendication 1 ou 2.
**caractérisé en ce que**
l'installation de compression (35) comporte un poinçon de compression (16) et un plateau de compression (27), le plateau (27) ayant un joint extérieur (20) venant en appui contre la périphérie du fond du conditionnement à gaz comprimé (17).

4. Dispositif selon les revendications 1, 2 ou 3,
**caractérisé en ce que**
l'installation de compression (37) comporte un moyen d'entraînement hydraulique ou pneumatique.

5. Dispositif selon l'une des revendications précédentes,
**caractérisé en ce que**
le manchon d'étanchéité (19K) est relié par une liaison de forme avec un joint d'étanchéité intérieur (18K).

6. Dispositif selon l'une quelconque des revendications précédentes,
**caractérisé en ce que**
l'aiguille creuse (29) comporte une pointe (42) munie d'arêtes de découpe ou d'arrachage (40) et cette pointe est notamment réalisée sous la forme d'un ciseau à pointe plate.

7. Dispositif selon l'une des revendications précédentes,
**caractérisé par**
une installation d'alimentation avec un tube d'introduction (4) et un moyen de centrage intégré pour les conditionnements (17) ayant des diamètres et des hauteurs différentes.

8. Dispositif selon l'une des revendications précédentes,
**caractérisé par**
une installation d'alimentation avec au moins un robot à pince.

9. Dispositif selon l'une des revendications précédentes,
**caractérisé en ce qu'**
elle est prévue dans une première chambre de travail (1) fermée vis-à-vis de l'environnement, cette chambre ayant un sas (3) communiquant avec l'extérieur.
